# EUROPEAN PATENT APPLICATION

(11) **EP 0 739 798 A2**
(43) Date of publication of application: **30.10.1996**
(21) Application number: 96500050.8
(22) Date of filing: 24.04.1996
(51) Int. Cl.: B60T 17/18, B60T 13/26, B60T 13/58

(54) **Safety device applicable to the pneumatic parking brake system of vehicles**

(30) Priority: 25.04.1995 ES 9500790
(71) Applicant: SUPERVISION Y CONTROL, S.A., 15004 La Coruna (ES); UNIVERSIDAD DE VIGO, 36201 Vigo, Pontevedra (ES)
(72) Inventor: Murillo Zapatero, Santiago, 36201 Vigo-(Pontevedra) (ES); Ribas Noguera, Jose Ma., 36201 Vigo-(Pontevedra) (ES); Vazquez Carballo, Oscar, 36201 Vigo-(Pontevedra) (ES)
(74) Representative: Elzaburu Marquez, Alberto

(57) **Abstract**

Safety device applicable to the pneumatic parking brake of vehicles, consisting of a mechanism which can be interposed at the input of the manual control valve, which prohibits the sending of positive pressure signals on the part of the handbrake and the consequent release thereof without the driver's knowledge.

## Description

### STATE OF THE PRIOR ART

In present-day systems, the parking brake of buses and lorries operates by means of the energy stored in a spring, which, in normal operation (with the vehicle moving) is compressed by the effect of the pressure which exists in the brake chamber.

If it is desired to actuate the said brake in order to bring the vehicle to a stop, the abovementioned chamber is discharged, by means of the normal control of the parking brake, the spring being freed and, via mechanical means, actuating on the brake shoes, the vehicle thus remaining braked.

In order to release the brakes of the vehicle, the order is given, by means of the abovementioned control, whereupon the brake chamber communicates with the pressurized air circuit, the spring becoming compressed and the vehicle brakes thus being released. This type of braking system is described, inter alia, in the patents ES355871 and US3107583. The patent EP490841 refers in a more concrete way to systems like the one described above, but specifically applied to parking and emergency brake chambers.

If, when the order is given to release the brakes, for whatever reason, such as the existence of a leak in the pneumatic installation, the pressure existing in the circuit is not sufficient to compress the spring, the vehicle brakes are not released, but the order to release the brakes is remembered.

Under the above hypothesis, with the engine running, the compressor charges up the air circuit. The moment the pressure exceeds the minimum, the vehicle executes the memorized command and the brakes are released.

If the driver is not at his position at this moment, control of the vehicle is lost. This case occurs to a certain extent with parked vehicles, severe accidents possibly being caused if the vehicle was parked on a slope.

Patented mechanisms exist (U290692) which incorporate electropneumatic switches which monitor and warn of the filling of the safety and emergency brake circuit. However, they do not have safety mechanisms which automatically prevent accidental movement of the vehicle.

Likewise, in the Spanish patents Nos. 357596 and 303146, there are described systems for permanent parking of trailers. In the first-mentioned patent, by means of a pressurized spring system which can be actuated upon vertical movement of the bar for connecting to the towing ball. In the second patent in question, an effect is obtained similar to the first one by means of a system of valves. In any event, it deals only with auxiliary systems coupled to the trailer brake, which lock or release it, in the case of parking or movement for loading and unloading.

### DETAILED DESCRIPTION OF THE INVENTION

This relates to a device, from now on called PRO (Parking brake Release Override) which, faced with the situation described above, acts on the parking brake circuit and prevents the manual control valve deactivating the said brake until the abovementioned device (PRO) permits it.

When the pressure in the brake circuit reaches values below the permitted minima, PRO prevents the parking brake being released.

For the purposes of defining the behaviour of PRO, it is necessary to identify the information received by it via an input signal, and its form of actuation.

The only information which is received from the pneumatic circuit is the pressure thereof, and this signal will have to be made use of in order to obtain the moment when, due to lack of pressure, the safety device has to be actuated.

When it is wished to apply the parking brake, what happens is that an order is given by means of the valve of the manual control of the said brake. This valve has two states, brake on and brake off.

For braking, the function of this valve is to open the exhaust vent of the circuit which links it with a differential protection valve, whereupon the brake actuator spring chamber discharges, leaving the vehicle braked.

To release the brake, the order is given, by means of a positive pressure signal, from the manual control valve of the parking brake, actuating on the differential protection so that the parking brake is released thereby by compression of the spring.

In conclusion we obtain the result that, if the PRO device is situated before the entry of the brake manual control valve, any drop in pressure makes it impossible for positive pressure signals to be sent on the part of the handbrake. This cutting-off of the supply of air to the manual control of the handbrake, when a pressure drop has occurred, is achieved by means of the direct action of the element (e) of the P.R.O. The orders to the element (e) originate both from the element (a), and the element (c) and are always transmitted through the element (b). The element (a) of the P.R.O. manually rearms the element (e) for the purpose of leaving the vehicle again in working order after a blockage has occurred due to a pressure drop in the circuit. The element (c), a pressure sensor, maintains the order to supply the air to the braking circuit on the part of the element (e), according to whether the pressure in the circuit does or does not reach a preestablished minimum. The element (d) damps out pressure transients which could disturb the operation of (c).

### DESCRIPTION OF THE DRAWINGS

Fig. 1 represents a braking circuit with the PRO modification for a vehicle without a trailer.

Fig. 2 represents a braking circuit with the PRO modification for a vehicle with a trailer.

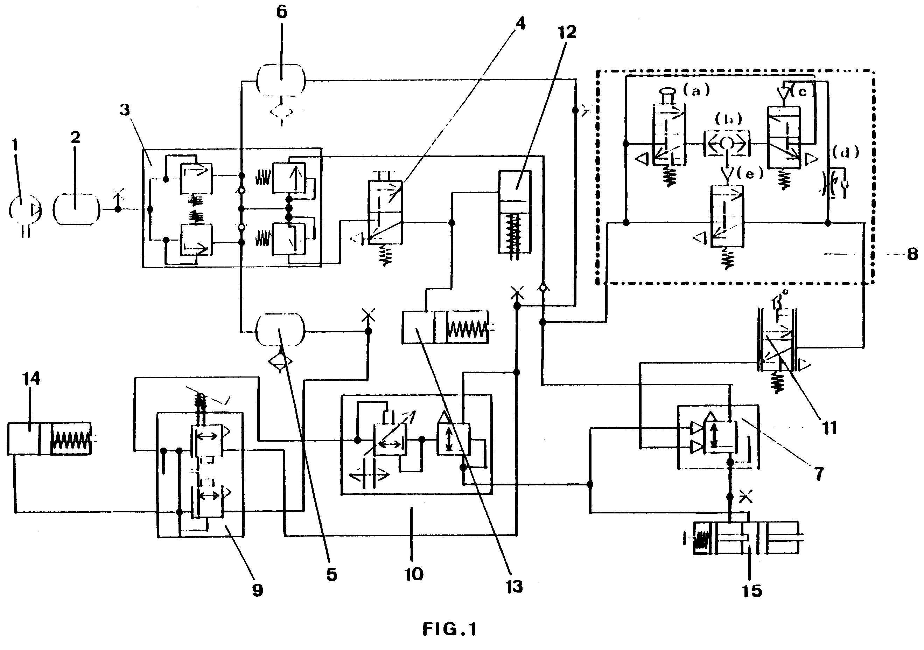

### EXPLANATION OF THE COMPONENTS OF FIG. 1

1.- Compressor: Element tasked with generating compressed air. Actuated by the vehicle engine.
2.- Wet container: Compressed air tank with drainage of condensates.
3.- Quadruple circuit protection valve: Maintains and guarantees the pressure in the braking circuits, isolating them from the rest in the event of a pressure drop in any of them.
4.- Engine brake 3/2 way valve: Allows control of the engine braking cylinders and cutting-off of injection.
5.- Front brake container: Stores the compressed air for subsequent use in the brake chambers.
6.- Rear brake container: Stores the compressed air for subsequent use in the brake actuators.
7.- Differential protection valve: Prevents the superposition of the braking forces from the service brake and from the parking brake.
8.- PRO: Safety device which prevents the parking brake of the vehicle being released in the event that there is insufficient pressure in the circuit. (a) Three-channel/two-position manual actuation distributor, with preferred locked position. (b) Circuit selector. (c) Three-channel pressure sensor. (d) Unidirectional flow regulator. (e) Three-channel/two-position pneumatic actuation distributor, with preferred locked position.
9.- Double-circuit brake valve: Allows the driver of the vehicle progressively and simultaneously to apply the braking force to the front and rear axes as well as to control the trailer braking system.
10.- Load-dependent braking regulator valve: Automatically regulates the braking force on a defined axis as a function of the load which the said axis is supporting.
11.- Parking brake manual control valve: Makes it possible to control progressive braking or the complete stopping of the vehicle by means of actuation of the lever.
12.- Injection cutoff cylinder: Cuts off the fuel injection, causing the vehicle to slow down without the use of the brake shoes.
13.- Engine brake cylinder: Closes off the exit for the gases through the exhaust manifold, causing the vehicle to slow down without the use of the brake shoes.
14.- Brake chamber: Receives a pressure which it converts into mechanical force, directly controlling the brake lever via a rod linkage.
15.- Brake actuator: Performs the same function as the chamber, but consists of two independent units:
   - Spring chamber; intended for emergency and parking brake.
   - Diaphragm chamber; intended for service brake.

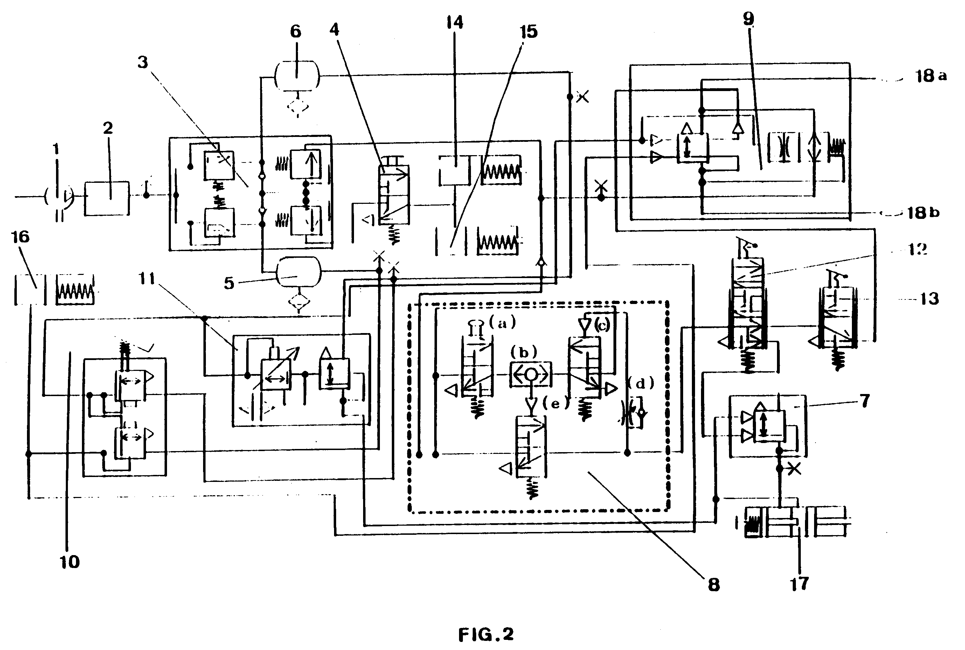

### EXPLANATION OF THE COMPONENTS OF FIG. 2

1.- Compressor: Element tasked with generating compressed air. Actuated by the vehicle engine.
2.- Wet container: Compressed air tank with drainage of condensates.
3.- Quadruple circuit protection valve: Maintains and guarantees the pressure in the braking circuits, isolating them from the rest in the event of a pressure drop in any of them.
4.- Engine brake 3/2 way valve: Allows control of the engine braking cylinders and cutting-off of injection.
5.- Front brake container: Stores the compressed air for subsequent use in the brake chambers.
6.- Rear brake container: Stores the compressed air for subsequent use in the brake actuators.
7.- Differential protection valve: Prevents the superposition of the braking forces from the service brake and from the parking brake.
8.- PRO: Safety device which prevents the parking brake of the vehicle being released in the event that there is insufficient pressure in the circuit. (a) Three-channel/two-position manual actuation distributor, with preferred locked position. (b) Circuit selector. (c) Three-channel pressure sensor. (d) Unidirectional flow regulator. (e) Three-channel/two-position pneumatic actuation distributor, with preferred locked position.
9.- Trailer control valve with breakage protection: Progressively controls the braking of a towed vehicle when the service or parking brake is applied in the driving vehicle even in the event of a breakdown.
10.- Double-circuit brake valve: Allows the driver of the vehicle progressively and simultaneously to apply the braking force to the front and rear axes as well as to control the trailer braking system.
11.- Load-dependent braking regulator valve: Automatically regulates the braking force on a defined axis as a function of the load which the said axis is supporting.
12.- Parking brake manual control valve: Makes it poseible to control progressive braking or the complete stopping of the vehicle by means of actuation of the lever.
13.- Independent brake manual control valve: Makes it possible, by actuating the lever, to apply progressive braking or stopping of the trailer.
14.- Injection cutoff cylinder: Cuts off the fuel injection, causing the vehicle to slow down without the use of the brake shoes.
15.- Engine brake cylinder: Closes off the exit for the gases through the exhaust manifold, causing the vehicle to slow down without the use of the brake shoes.
16.- Brake chamber: Receives a pressure which it converts into mechanical force, directly controlling the brake lever via a rod linkage.
17.- Brake actuator: Performs the same function as the chamber, but consists of two independent units:
   - Spring chamber; intended for emergency and parking brake.
   - Diaphragm chamber; intended for service brake.
18.- Coupling points: Provide the flexible link:
   a) Supply line.
   b) Service brake line.

## Claims

1. Safety device for vehicle braking circuits, which consists of an element which can be interposed and which overrides the sending of positive memorized commands for releasing the brakes on the part of the parking brake, automatically, without the intervention of the driver, and consists of the following functional elements:
a) Three-channel manual distributor with two positions, preferably locked
b) Circuit selector
c) Three-channel pressure sensor
d) Unidirectional flow regulator
e) Three-channel pneumatic actuation distributor with two positions, preferably locked.

2. Safety device for vehicle braking circuits according to Claim 1, characterized in that it is arranged between the manual control valve of the parking brake and the differential protection valve.

3. Safety device for vehicle braking circuits according to Claims 1 and 2, characterized in that it comes into operation when it detects a signal indicating a lowering in the internal pneumatic pressure of the brake chamber below a preestablished minimum value, preferably 6.54 bar.

4. Safety device for vehicle braking circuits according to Claims 1 to 3, characterized in that it is overridden by means of a specific brake release control, which can be actuated by the driver, separate from the parking brake control.

5. Safety device for vehicle braking circuits according to Claim 4, characterized in that the specific brake release control which overrides it can only carry out its function when the internal pressure of the brake chamber has been reestablished at a preset functional value, preferably 6.54 bar.

6. Safety device for vehicle braking circuits according to Claims 1 to 5, characterized in that it is capable of detecting signals relating to the internal pneumatic pressure of the brake chamber.

7. Safety device for vehicle braking circuits according to Claim 6, characterized in that it can detect electropneumatic signals.

8. Safety device for vehicle braking circuits according to Claims 1 to 7, characterized in that it is applied to heavy vehicles, with or without a trailer.
